**Europäisches Patentamt**

**European Patent Office**

**Office européen des brevets**

(19)

(11) Publication number : **0 490 637 A1**

## (12) EUROPEAN PATENT APPLICATION

(21) Application number : **91311472.4**

(22) Date of filing : **10.12.91**

(51) Int. Cl.⁵ : **H02G 15/04, H02G 3/06**

(30) Priority : **10.12.90 GB 9026785**

(43) Date of publication of application :
**17.06.92 Bulletin 92/25**

(84) Designated Contracting States :
**AT BE CH DE DK ES FR GB GR IT LI LU MC NL SE**

(71) Applicant : **C M P (UK) Limited**
**Glasshouse Street**
**St Peter's, Newcastle-Upon-Tyne NE6 1BE (GB)**

(72) Inventor : **Sowerby, David**
**15 Richmond Way, Barns Park**
**Cramlington, Northumberland NE23 7XE (GB)**

(74) Representative : **Hale, Peter et al**
**Kilburn & Strode 30 John Street**
**London WC1N 2DD (GB)**

(54) **Disconnectable cable gland assembly.**

(57) A cable gland assembly for the junction between a wall and a cable (50,51) which may be armoured, passing through an aperture in a wall, includes a sealing ring (18) around the outer sheath of a cable passing through the assembly, the seal comprising a rectangular cross section ring with a 'V' shaped groove running around the outer rim of the ring. The assembly is disconnectable without releasing the sealing ring (18) around the cable, by means of a joint between a first portion (16) of the assembly which may be screwed into a wall and a second portion (17) of the assembly which includes the sealing ring (18). The joint comprises a projection (33) on the second portion (17) through which the cable passes and a corresponding recess in the first portion (16) into which the projection (33) is sealingly received. The first and second portions are held together by a ring of ball bearings (52) extending through the wall of the recess and into a groove (54) on the projection (33). The ball bearings being retained in place by a axially movable retaining sleeve (22).

EP 0 490 637 A1

This invention relates to a cable gland assembly for the junction between a wall of, for example, a housing and a cable which passes through an aperture in the wall.

A junction between a cable and an aperture in a wall is required in many applications effectively to maintain an isolation between the atmospheres on either side of the wall. This may be, for example, in some circumstances to prevent moisture or corrosive material from passing the boundary provided by the wall and/or to prevent combustible gases from migrating across the boundary. Circumstances may also dictate that the seal between the cable and wall is fully waterproof, flameproof or explosion-proof or a combination of these.

In other circumstance a cable gland is required to provide an earthing clamp for the wire armour of the cable. In a harsh industrial environment using continuous processes, such as the chemical and oil industries, electrical apparatus (for example electric motors) are found to suffer relatively rapid deterioration. This means that the relatively apparatus has to be replaced or removed for repair at frequent intervals. Each time repair is carried out the cable supplying the apparatus has to be disconnected.

When a resilient gland seal is initially compressed onto the outer sheath of a cable the initial seal is effected by the interaction of the sealing force exerted by the seal and the elasticity of the cable sheath and internal core insulation. This interaction squeezes the core insulation sheath axially away from the annular area on which the seal pressure is exerted until there is an equalisation of forces and sealed condition is achieved. In fact in order to create a good seal, it is normal to design the gland sealing ring so that, when compressed onto a cable, one edge of it 'bites' into the cable sheath which may cause severe distortion.

If such a seal is released in order to permit removal of a piece of electrical apparatus, neither the gland sealing ring nor the sheaths of the cable and core will resume their original shape. It may, therefore, not be possible to use the same sealing ring in the same position on the cable to create as effective a seal a second time. In this case, disconnection of the cable from the wall will require that extensive impedance and earth continuity tests of the re-clamped protective electrical armouring are carried out when the cable is reinstalled. It is necessary to provide new sealing components to be confident that an adequate seal is effected.

In a flame-proof or explosion-proof cable gland assembly it is normal to employ two gland sealing rings, one for engaging the outer sheath of the cable and one for engaging the inner sheath. When disconnecting and reconnecting such an assembly it is normally necessary to replace both gland sealing rings in order to ensure an adequate seal on reconnection.

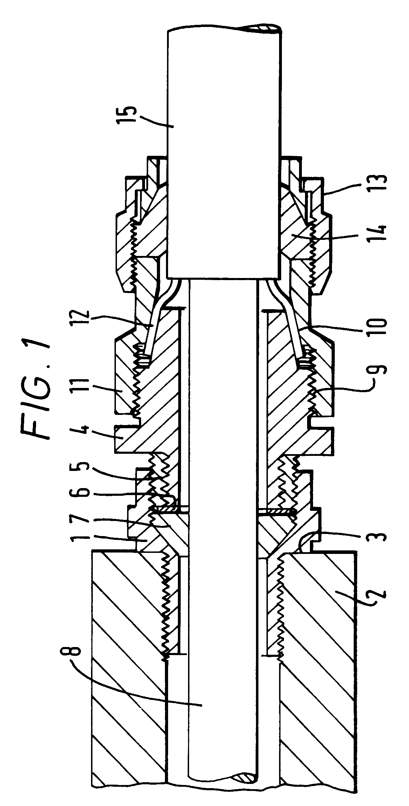

An example of a waterproof and flameproof cable gland assembly is shown in Figure 1 which is a longitudinal section. The assembly comprises an entry component 1 which carries an external thread on one end by means of which the component 1 may be screwed into a housing 2. When in place in the housing 2, an annular shoulder 3 abuts and seals against the external surface of the housing 2. At the opposite end of the entry component 1 is an internal thread into which is received an externally threaded portion of a gland body 4, together with a threaded bush 5 between the two threads. When the bush and gland body are tightened their end faces bear against a washer 6 which in turn bears against a gland sealing ring 7 mounted inside the entry component against a tapered surface. The sealing ring 7 is thereby compressed against a cable inner sheath 8 passsing through the gland assembly.

At the opposite end of the gland body 4 are an externally threaded portion 9 and a tapered portion 10. A clamping sleeve 11 carries an internally threaded portion which meshes with the external thread 9 on the gland body. In use exposed cable armour sheath 12 is clamped between an internal tapered surface on the clamping sleeve and the tapered surface 10 on the gland body.

At the opposite end of the clamping sleeve 11, a seal nut 13 is screwed on to the sleeve. The seal nut is tightened to compress an outer gland sealing ring 14 against the outer cable sheath 15 in a similar manner to the inner sealing ring 7.

A problem with the gland sealing rings described is that one edge of the ring tends to be forced inwardly onto the cable sheath, thus tending to 'bite' into the sheath. Considerable, usually permanent, distortion of the sheath results.

Rotation of the gland assembly during installation is, of course, highly undesirable since the cable is then stressed by being twisted. The sealing ring or rings around the twisted cable are thus left under stress and the seal around the cable may be affected. Furthermore, the gland assembly itself is left with a constant torque applied to it by the distorted cable which urges it to become unscrewed.

There is, therefore, a need for a cable gland assembly which may be repeatedly disconnected and connected without releasing the seals. It is also desirable that there be no risk of twisting the cable on installation or reconnection of the gland assembly.

From time to time it is necessary to release the seal or seals in a gland assembly. It is desirable, in such circumstances, that the extent of distortion of the cable by the sealing ring or rings is minimised. It is therefore desirable that the gland assembly contains the minimum number of sealing rings possible, and that the sealing rings distort the cable as little as possible.

It is, therefore, an object of the present invention to provide a cable gland assembly which is readily disconnectable and reconnectable without releasing the gland sealing ring or rings around the cable, and without placing undue stress on the gland sealing ring or rings by rotation of part of the assembly relative to the cable.

According to the present invention, a cable gland assembly of the type which comprises a first portion for mounting in a wall and a second portion including a cable gland seal, wherein one of the first and second portions carries a projection having a bore through which a cable may pass is characterised in that the projection is adapted to be a push-fit into a recess within the other of the first and second portions to create a seal between the portions, and that the first and second portions further include locking means by which the projection may be locked in place in the recess.

The seal between the projection and recess provides a flameproofing path.

Preferably, the seal is created by means of the projection being an elongate close-tolerance fit in the recess. The projection, or the recess, may alternatively (or in addition) carry an O-ring seal made of resilient material such as polychloropropene received in an annular groove in the surface of the projection or recess. The O-ring seal forms a waterproof seal between the projection and recess.

The locking means preferably take the form of one or more locking members, mounted on one of the projection or recess which are movable radially with respect to the gland assembly between a position in which they engage in an annular groove in the recess or projection and a position disengaged from the groove. The locking means may have means for retaining the locking member or members in place in the groove. Normally, the projection carried the groove and the locking members are ball bearings located in detents in the surface defining the recess, the recess being part of a unitary entry component. The detents are normally radially inwardly tapered and allow the ball bearings to project inwardly into the recess to a limited extent. The ball bearings are preferably kept in place by a retaining sleeve which extends around the entry component. The retaining sleeve is normally slidable between a locked position in which the ball bearings are retained in the detends in the entry component by the sleeve and an unlocked position in which an internal annular keep for the or each ball in the sleeve is in registry with the detents, the balls being movable into the keep to allow separation of the first and second portions. The ball bearings are movable into the annular keep in the sleeve when the projection enters the recess in the entry component. In this way the ballbearings become disengaged from the groove. Where only one locking member, e.g. a ball bearing is used, the locking means works in the same way. In this case, and indeed in general, the keep and groove need not be annular.

In addition to the above features, a cable gland assembly in accordance with the invention may include a gland sealing ring for sealing around the cable sheath. The sealing ring may have an annular groove in its outer circumferential surface such that when the ring is compressed axially, the ring bulges radially inwardly at the middle rather than at the edges. The sealing ring is thereby brought into engagement with a cable sheath in such a manner that the sealing ring does not 'bite' the sheath. Preferably, the sealing ring, in use, seals around the outer sheath of a cable.

Preferably, particularly in a gland assembly for an armoured cable, the gland assembly includes two components adapted to clamp cable armour between them. In such a gland assembly which is also waterproof, one of the two components may have a sealing ring received in an annular groove on one of the components, the other component having a sealing surface against which the sealing ring seals when the two components are fitted together.

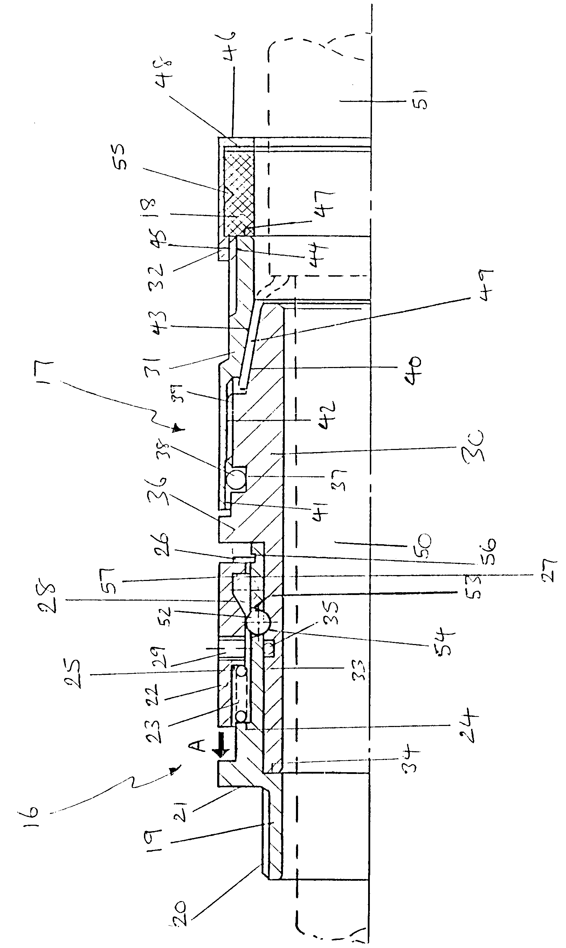

The following description of one specific embodiment of the invention is given by way of example only with reference to Figure 2 of the accompanying drawings which is a longitudinal section through a cable gland assembly in accordance with the invention.

A cable assembly, which is suitable for an armoured cable and which is waterproof and flameproof, comprises a first portion 16 for mounting in the wall of a housing and a second portion 17 containing a gland sealing ring 18. The first portion 16 comprises a generally tubular entry component 19, externally threaded at one end 20 and having an flange 21, one surface of which abuts against the external surface of the wall to form a seal.

On the side of the flange 21 remote from the end 20, the entry component is formed with a shoulder 24 and still further on, the outer surface of a sleeve portion of the component has a number of angularly spaced apertures 53 around the periphery of the sleeve portion of the component. Each aperture is tapered or rounded slightly radially inwardly. Each aperture acts as a detent for one of the ball bearings 52 which project radially inwardly, through its respective aperture into the internal bore of the entry component, and radially outwardly from its aperture. At the far end of the entry component is an outwardly directed annular groove 56 in which is received a retaining ring 26.

The first portion 16 of the gland assembly further comprises a generally cylindrical retaining sleeve 22 extending around and coaxial with the entry component 19 on the side of the flange 21 remote from the end 20, which sleeve 22 engages the radially outer periphery of the ball bearings 52 and keeps them in place, each in its respective aperture. A spring 23 is received inside the retaining sleeve 22 between the shoulder 24 on the entry component and a facing internal annular shoulder 25 on the retaining sleeve 22. The spring 23 biases the retaining sleeve 22 against the retaining ring 26 at the far end of the entry component. The retaining sleeve further includes an internal chamber 27 at the far end thereof which is defined by a straight circular wall 57 and a tapered circular wall 28 extending radially inwardly from the wall 57. The retaining sleeve 22 also has a circular threaded hole 29 between the shoulder 25 and the tapered circular wall 28.

The second portion 17 of the gland assembly comprises a main sleeve 30, an armour clamping sleeve 31, a gland sealing ring 18 and a seal nut 32. The main sleeve 30 has a sleeve-like projection 33 adapted to fit coaxially inside the entry component 19 and abut against an internal shoulder 34 in the entry component. A first 'O' ring seal 35 is received in an annular groove in the external surface of the projection which engages the internal cylindrical surface of the entry component to create a seal. A further annular groove 54 adjacent the seal receives the radially inwardly protruding portion of each of the ball bearings 52. Approximately half way along the main sleeve 30 is an external hexagonal nut flange 36. Adjacent to it, and remote from the first portion 16 of the assembly, is a region of reduced diameter, relative to the flange, which has an external annular groove 37 in which is received a second 'O' ring seal 38. On the side of the seal 38 remote from the flange 36 there is an external thread 39 and, further on, at the far end of the main sleeve is a tapered region 40.

The armour clamping sleeve 31, comprises an internal sealing surface 41, which seals against the second 'O' ring 38, an internally threaded region 42, which engages with the external thread 39 on the main sleeve and an internal tapered region 43 which cooperates with the tapered region 40 on the main sleeve 30.

At the far end of the armour clamping sleeve is an externally threaded region 44, onto which is received the internal thread 45 of the seal nut 32. The seal nut has a radially inwardly directed annular flange 46 at its far end. Inside the seal nut and between the flange 46 and the far end face 47 of the armour clamping sleeve 31 are received a skid washer 48 and the annular gland sealing ring 18. The gland sealing ring is rectangular in cross-section, with a 'V' shaped groove 55 formed in its radially external surface, approximately halfway along the length of the ring in the axial direction of the gland assembly. The sealing ring is made from a resilient material such as neoprene rubber or polychloropropene which seals effectively against the material of a cable sheath.

To assemble the gland, a cable is stripped of its outer sheath 51 to its inner sheath 50, and is inserted through the main sleeve 30. The cable armour 49 is cut to length and splayed to fit around the tapered region 40 at the end of the main sleeve. The armour clamping sleeve 31, which has previously been threaded onto the cable, is then screwed into the main sleeve and the internal tapered region 43 engages the cable armour 49 and clamps it against the tapered region 40 of the main sleeve. The internal sealing surface 41 on the armour clamping sleeve engages the second 'O' ring 38 and seals against it. Then the seal nut 32, which has also been previously threaded onto the cable, is screwed onto the far end of the armour clamping sleeve and the gland sealing ring 18 compressed against the cable outer sheath 51.

As the seal nut 32 is tightened, the flanges 46 bears against the skid washer 48 which in turn bears on the sealing ring 18. The ring 18 is thus squeezed between the end face 47 of the armour clamping sleeve and the skid washer 48. The 'V'-shaped groove 55 formed in the outside of the ring 18 causes the outer surface of the ring to compress more than the inner surface, thus causing the ring to bow radially inwardly in the middle. A seal is therefore made between the middle of the ring 18 and the cable sheath, which results in less distortion of the sheath than is normal because there is no sharp edge producing a 'biting' effect on the cable outer sheath as with a conventional sealing ring.

The first portion 16 of the gland assembly, comprising the entry component 19, with retaining sleeve 22, spring 23, retaining ring 26 and ball bearings 52 is then engaged with a suitably threaded hole in a wall by means of the threaded portion 20. The retaining sleeve 22 is then pushed axially against the spring 23 in the direction of the arrow A. The internal chamber 27 on the retaining member is thereby brought into registry with the ball bearings 52. The assembled second portion 17 of the gland assembly is then brought up to the first portion and the projection 33 inserted into the bore of the entry component. The projection pushes the ball bearings outwards into the annular recess in the retaining sleeve. The first 'O' ring seal 35 seals against the internal surface of the entry component, and the groove 54 in the projection is brought into registry with the apertures 53. The retaining sleeve is then released and the ball bearings are forced inwardly as the inclined surface 28 on the inside of the chamber 27 pushes against them. The ball bearings are thus retained in place once more by the retaining sleeve, and extend inwardly into the groove 54 on the projection, thus retaining the second portion 17 of the gland assembly in place. A set screw (not shown) may then be screwed into the hole 29 in the retaining sleeve engage with the surface of the entry component in order to lock the sleeve in place and prevent accidental release of the joint between the first and second portions of the gland.

The flameproofing path between the first and second portions of the gland assembly is provided by a close tolerance fit between the projection 33 and the internal bore of the entry component. The length of the projection and internal bore may vary. However, the greater the length of engagement between the two, the longer the flame path and thus the higher the specification of the assembly with regard to penetration of flames through it.

The waterproof seal is provided, in part, by the 'O' ring seal 35 which is able to withstand repeated connection and disconnection without substantial deterioration in the quality of the seal. In the sevent that the quality of the O-ring deteriorates, it is a relatively simple matter to replace it.

The completion of the flameproofing path is effected between the main sleeve 30 and the armour clamping sleeve 31 by providing at least 5 full turns onto the screw thread 39 of the sleeve 31. The remaining waterproof seal is provided by the 'O' ring seal 38.

The quality of these seals means that a sealing ring around the inner cable sheath is unnecessary in order to provide a completely flameproof and waterproof gland assembly. The distortion of the inner sheath which would occur as the result of tightening a seal around it is thus avoided.

The metallic portions of the gland assembly may be made of any suitable metal such as is common in the art, e.g. brass, steel, aluminium, stainless steel. The seal components are made from a resilient material such as polychloropropene or some other elastomer.

## Claims

1. A cable gland assembly comprising a first portion (16) for mounting in wall and a second portion (17) including a cable gland seal, wherein one of the first and second portions carries a projection (33) having a bore through which a cable may pass, characterised in that the projection (33) is adapted to be a push-fit into a recess within the other of the first and second portions to create a seal between the portions, the first and second portions further including locking means (52,54) by which the projection (33) may be locked in place in the recess.

2. An assembly as claimed in claim 1 characterised in that the projection (33) is an elongate close tolerance fit in the recess and/or a resilient O-ring seal (35) is received between, and located in, an annular groove in one of the projection (33) and recess to constitute the seal between the projection (33) and the recess.

3. An assembly as claimed in claim 1 or claim 2 characterised in that the locking means (52,54) comprise one or more locking members (52) which are movable generally radially with respect to the axis of the gland assembly between a position in which the or each locking member (52) engages in a corresponding receiving depression (54) in one of the projection (33) or recess and a position disengaged from the depression (54).

4. An assembly as claimed in claim 3 including retaining means for retaining the locking member in the corresponding depression, for example, the first portion includes an entry component (19) in which the recess is formed, characterised in that the or each locking member (52) is a ball bearing located in a corresponding detent (53) in the surface of the recess.

5. An assembly as claimed in claim 4 characterised in that the detent (53) is radially inwardly tapered such as to allow the corresponding ball bearing (52) to project inwardly into the recess to a limited extent.

6. An assembly as claimed in claim 4 or claim 5 characterised in that the ball bearing (52) is kept in place by a retaing sleeve (22) which extends around the entry component (19).

7. An assembly as claimed in claim 6 characterised in that the retaining sleeve (22) is slidable between a locked position in which the ball bearing (52) is retained in the detent (53) in the entry component (19) by the sleeve (22) and an unlocked position in which an internal keep (27) for the or each ball in the sleeve is in registry with the detent, the balls being movable into the keep to allow separation of the first and second portions.

8. An assembly as claimed in any one of the proceeding claims characterised in that the cable gland seal comprises a gland sealing ring (18) which has a groove in its outer circumferential surface.

9. An assembly as claimed in claim 8 for an armoured cable, characterised in that the assembly includes two components (30,31) adapted to clamp the cable armour (49) between them.

10. An assembly as claimed in claim 9 which is also waterproof, characterised in that one of the two components (30,31) has a sealing ring (38) received in an annular groove (37) on the component, the other of the two components (30,31) having a sealing surface against which the sealing ring (38) seals when the two components (30,31) are fitted together.

FIG. 1

**European Patent Office**

**EUROPEAN SEARCH REPORT**

Application Number

EP 91 31 1472

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 507 027 (HAWKE CABLE GLANDS) <br> * page 2, line 73 - line 122; figures 4,5 * <br> --- | 1,8,9 | H02G15/04 <br> H02G3/06 |
| X | GB-A-2 214 728 (CMP) <br> * page 7, line 23 - page 11, line 23; figures 1,2 * <br> --- | 1,8,9 | |
| A | FR-A-2 462 797 (LES CABLES DE LYON) <br> * page 2, line 9 - line 35; figures 1,2 * <br> --- | 1,3-7 | |
| A | US-A-3 110 537 (P.H. POETZSCH ET AL.) <br> * column 8, line 59 - column 10, line 5; figures 14-17 * <br> ----- | 1-7 | |
| | | | TECHNICAL FIELDS SEARCHED (Int. Cl.5) |
| | | | H02G <br> H01R |

The present search report has been drawn up for all claims

| Place of search | Date of completion of the search | Examiner |
|---|---|---|
| THE HAGUE | 23 MARCH 1992 | LOMMEL A. |